**Europäisches Patentamt**

**European Patent Office**

**Office européen des brevets**

(19)

(11) Veröffentlichungsnummer : **0 322 502 B1**

(12)

# EUROPÄISCHE PATENTSCHRIFT

(45) Veröffentlichungstag der Patentschrift :
**09.11.94 Patentblatt 94/45**

(51) Int. Cl.$^5$ : **G01S 3/14,** G01S 11/00

(21) Anmeldenummer : **88111177.7**

(22) Anmeldetag : **13.07.88**

(54) **Vorrichtung zum Bestimmen von Zieldaten.**

(30) Priorität : **24.12.87 DE 3744051**

(43) Veröffentlichungstag der Anmeldung :
**05.07.89 Patentblatt 89/27**

(45) Bekanntmachung des Hinweises auf die
Patenterteilung :
**09.11.94 Patentblatt 94/45**

(84) Benannte Vertragsstaaten :
**DE FR GB IT NL SE**

(56) Entgegenhaltungen :
**EP-A- 0 185 994**
**WO-A-86/03014**
**WO-A-86/07451**
**US-A- 4 503 382**

(73) Patentinhaber : **ATLAS ELEKTRONIK GMBH**
**D-28305 Bremen (DE)**

(72) Erfinder : **Rathjen, Dirk, Dr. Dipl.-Phys.**
**Am Rüten 68**
**D-2800 Bremen 33 (DE)**
Erfinder : **Burggraf, Hubert, Dr. Dipl.-Phys.**
**Hoher Acker 6**
**D-2806 Oyten-Bassen (DE)**

EP 0 322 502 B1

## Beschreibung

Die Erfindung betrifft eine Vorrichtung zum Bestimmen von Zieldaten der im Oberbegriff des Anspruchs 1 genannten Art.

In der Radar- und Sonartechnik wird vom Ziel abgestrahlte oder reflektierte elektromagnetische oder akustische Wellenenergie mit einer Empfangsanordnung aus Einzelelementen empfangen und in Empfangssignale gewandelt. Die Empfangssignale werden dazu benutzt, Peilung und Entfernung zum Ziel als Zieldaten zu bestimmen. Weiterhin ist die empfangene Frequenz von Interesse, um beispielsweise, insbesondere bei reflektierter Wellenenergie, aus der Dopplerverschiebung die Geschwindigkeit des Ziels zu ermitteln, oder bei abgestrahlter Wellenenergie die Peilung zu mehreren Zielen frequenzmäßig zu trennen. In der Sonartechnik ist es besonders wünschenswert, Zieldaten aus vom Ziel selbst generierter und abgestrahlter akustischer Wellenenergie, z. B. aus dem Fahrgeräusch eines Schiffes, durch Abhorchen, also passiv, zu bestimmen.

Aus der US-PS 4 634 230 ist eine Anordnung bekannt, bei der mit optischen Mitteln Peilungen in Abhängigkeit von der Frequenz der Empfangssignale ermittelt werden. Eine optische Modulatoranordnung als maßstäblich verkleinerte Antennenanordnung wird von den Empfangssignalen der Einzelelemente der Empfangsanordnung angesteuert und liefert ein Lichtwellenfeld, das die Phasenbeziehungen des empfangenen Wellenfeldes wiedergibt. Die Modulatoranordnung besteht aus akusto-optischen Einseitenbandmodulatoren, z. B. Bragg-Zellen, die nebeneinander in Längsrichtung entsprechend der Konfiguration der Empfangsanordnung angeordnet sind und senkrecht dazu akustisch durch die Empfangssignale angesteuert werden. Die parallel einfallenden Lichtstrahlen verlassen die Modulatoranordnung in einer Ebene, die durch die Längsrichtung und die optische Achse bestimmt wird, unter einem Winkel, der durch die Phasenverschiebungen zwischen den Empfangssignalen bedingt ist. In einer Ebene senkrecht dazu, die von der optischen Achse und der Senkrechten auf die Längsrichtung bestimmt wird, werden die Lichtstrahlen abhängig von der Frequenz der Empfangssignale aufgrund der Bragg-Beugung in unterschiedliche Austrittswinkel gebeugt. Mit einer der Modulatoranordnung nachgeordneten sphärischen Sammellinse werden die austretenden Lichtstrahlen auf eine Abbildungsebene fokussiert. Es entsteht eine Abbildung des Einfallswinkels der empfangenen Wellenenergie in Abhängigkeit der Frequenz der Empfangssignale. Eine solche Modulatoranordnung ist besonders vorteilhaft für hochfrequente Empfangssignale einsetzbar, wie sie beispielsweise in der Radartechnik üblich sind.

In der Patentanmeldung EP-A- 0 316 513 ist eine optische Modulatoranordnung aus einzelnen optischen Einseitenbandmodulatoren für Empfangssignale niedrigerer Frequenz beschrieben, die beispielsweise erfolgreich für Empfangssignale in der Sonartechnik einsetzbar ist. Mit einer nachgeordneten sphärischen Sammellinse ist jedoch nur eine Peilung zum Ziel möglich.

Es ist Aufgabe der vorliegenden Erfindung, eine Vorrichtung der im Oberbegriff des Anspruchs 1 genannten Art zu schaffen, die unter Verwendung optischer Signalverarbeitung gleichzeitig eine Bestimmung von Peilung und Entfernung zum Ziel aus der empfangenen Wellenenergie gestattet.

Dies Aufgabe wird erfindungsgemäße durch die Merkmale im Kennzeichenteil des Anspruchs 1 gelöst.

Befindet sich das Ziel im Fernfeld der Empfangsanordnung, dann weist die vom Ziel abgestrahlte oder reflektierte Wellenenergie am Empfangsort eine ebene Wellenfront auf. Die Empfangssignale sind konphas und steuern die Modulatoranordnung konphas an.

Bei Verwendung einer Zylinderlinse mit fester Brennweite wird das die Modulatoranordnung in ebener Wellenfront verlassende Licht in der Brennebene der Zylinderlinse auf einer dort angeordneten Detektoranordnung fokussiert. Bei einer Einfallsrichtung der empfangenen Wellenenergie aus der Normalen auf die ebene Empfangsanordnung befindet sich die scharfe Abbildung im Brennpunkt auf der optischen Achse. Bei einer davon verschiedenen Empfangsrichtung weisen die Empfangssignale linear vom Ort der Einzelelemente abhängiger Phasenverschiebungen gegeneinander auf und die die Modulatoranordnung verlassenden Lichtstrahlen weisen die gleichen Phasenbeziehungen in der durch die Längsrichtung der Modulatoranordnung und die optische Achse aufgespannten Ebene auf. Der fokussierte Lichtstreifen in der Brennebene wandert parallel zur Längsrichtung aus. Dieser Sachverhalt ist bereits aus der vorher genannten US-Patentschrift bekannt.

Bei geringeren Entfernungen erschwert die am Empfangsort gekrümmte Wellenfront eine Peilung zum Ziel. Andererseits ist aber gerade die Durchkrümmung der Wellenfront ein Maß für die Entfernung zwischen Ziel und Empfangsort. Der Vorteil der erfindungsgemäßen Vorrichtung nach Anspruch 1 besteht darin, daß das von der Modulatoranordnung in Licht umgesetzte empfangene Wellenfeld bei gekrümmten Wellenfronten eine exakte Peilung wie beim Fernfeldempfang und zusätzlich eine Entfernungsbestimmung gestattet.

Die Modulatoranordnung wird bei Nahfeldempfang nicht mehr von konphasen oder linear gegeneinander phasenverschobenen Empfangssignalen angesteuert, da die Einzelelemente der Empfangsanordnung eine gekrümmte Wellenfront empfangen. Das sich ausbildende Lichtfeld enthält jetzt keine parallelen Lichtstrahlen mehr, sondern divergierende Strahlen, wie bei einer Zerstreuungslinse, wenn sie mit parallelem Licht beleuchtet wird. Bei der Anordnung nach dem Stand der Technik würde die Abbildung unscharf werden und eine exakte Peilung unmöglich machen. Mit der erfindungsgemäßen Vorrichtung nach Anspruch 1 wird dieser Effekt jedoch ausgenutzt. Die "Brennweite" einer durch die von den Empfangssignalen angesteuerten, als Zerstreuungslinse wirkende Modulatoranordnung entspricht einer Entfernung zum Ziel. Die nachfolgende Zylinderlinse fokussiert die divergierenden Lichtstrahlen in größerem Abstand als ihre Brennweite. Erfindungsgemäß wird die Detektoranordnung so lange verschoben, bis eine Scharfeinstellung erreicht ist. Die Verschiebung gibt die Entfernung zwischen Empfangsanordnung und Ziel an, wenn die Peilung zum Ziel gleich der Normalen auf die Empfangsanordnung ist. Bei einer Abweichung von der Normalen wandert der scharf eingestellte Lichtstreifen auf der Detektoranordnung parallel zur Längsrichtung der Modulatoranordnung aus. Der Abstand zwischen Zylinderlinse und Detektoranordnung muß ebenfalls nachgestellt werden. Der sich dann ergebende Abstand und die Auswanderung in Längsrichtung sind ein Maß für die Entfernung und Peilung zum Ziel. Die mathematischen Zusammenhänge ergeben sich durch Anwendung der Abbildungsgleichung unter Berücksichtigung der Wellenlänge des Lichts und der empfangenen Wellenenergie und eines Maßstabsfaktors, der sich aus der Übertragung einer Weglänge vom Empfangssystem in das Lichtsystem ergibt.

Beim heutigen Stand der Technologie in der Optik ist es besonders elegant, eine Zylinderlinse mit variabler Brennweite zu verwenden. Der Vorteil besteht darin, daß der Abstand der Detektoranordnung unverändert bleibt. Die eingestellte Brennweite geht in gleicher Weise wie die Variation des Abstandes in die Bestimmung von Peilung und Entfernung ein.

Der Vorteil der erfindungsgemäßen Vorrichtung besteht insbesondere darin, daß ohne Rechenaufwand mit optischen Bauelementen beide Zieldaten, nämlich Entfernung und Peilung, simultan bestimmt werden können. Durch Schafeinstellung und Abbildung wird das Wellenfeld vom Ortsbereich in den Raumwinkelbereich mit einer einzigen Zylinderlinse transformiert, so daß simultan beide Zieldaten zur Verfügung stehen. Nur zwei Variable in dem optischen System ermöglichen die Ortung beliebig vieler Ziele, insbesondere im Nahfeld, nämlich erstens der Abstand oder die Brennweite und zweitens die Ablage der Abbildung in Längsrichtung der Modulatoranordnung und senkrecht zur optischen Achse. Mit der erfindungsgemäßen Vorrichtung ist somit eine Ortung eines sich nähernden Ziels, insbesondere auch in geringer Entfernung , mit großer Genauigkeit möglich.

Die erfindungsgemäße Vorrichtung ist nicht nur bei passiven Sonaranlagen einsetzbar, sondern auch beispielsweise in Minensuchanlagen, bei denen Sonarimpulse ausgesendet und nach Reflexion in bezug auf Peilung und Entfernung ausgewertet werden. Auch hier sind genaue Ortsangaben bei geringen Entfernungen zwischen Mine und Minensuchanlage von größtem Interesse, bei der gekrümmte Wellenfronten empfangen werden und somit mit herkömmlichen Mitteln eine Peilung erschwert ist.

Sind mehrere Ziele vor der Empfangsanordnung, deren abgestrahlte Wellenenergie gleichzeitig empfangen wird, so erfolgt die Ermittlung der Meßdaten zur Ortsbestimmung jedes Ziels durch jeweilige Scharfeinstellung, so daß nacheinander sämtliche Ziele erfaßt werden.

Ein weiterer großer Vorteil der erfindungsgemäßen Vorrichtung nach Anspruch 1 besteht darin, daß durch die Scharfeinstellung Störsignale aus anderen Entfernungsbereichen unterdrückt werden, so daß das Nutz-/Störverhältnis wesentlich verbessert wird.

Die Weiterbildung der erfindungsgemäßen Vorrichtung nach Anspruch 2 ist besonders dann von Vorteil, wenn die Brennweite der Zylinderlinse variabel ist, da denn eine Scharfeinstellung auf der Detektoranordnung besonders einfach durchführbar ist.

Der besondere Vorteil der erfindungsgemäßen Vorrichtung nach Anspruch 3 besteht darin, daß bei Verwendung einer Zylinderlinse mit fester Brennweite die Detektoranordnung nicht verschoben zu werden braucht, sondern die Abbildung auf der geneigten Detektoranordnung eine Einschnürung aufweist, deren Abstand zur Zylinderlinse und deren Ablage von der optischen Achse Peilung und Entfernung zum Ziel angeben. Besonders vorteilhaft ist hier, daß automatisch die Scharfeinstellung erfolgt.Ein weiterer Vorteil besteht darin, daß Meßdaten mehrere Ziele gleichzeitig zur Verfügung stehen, ohne daß eine oder mehrere Scharfeinstellungen notwendig sind.

In der Sonartechnik wird als Modulatoranordnung vorteilhaft eine mehrkanalige Einseitenbandmodulatoranordnung nach Patentanmeldung EP-A- 0 316 513 eingesetzt, mit der auch beliebig niederfrequente Empfangssignale auf Licht als Träger aufmoduliert werden können. Das die Modulatoranordnung verlassende Lichtwellenfeld gibt die Wellenfronten in bezug auf Form und Einfallsrichtung der empfangenen akustischen Wellenenergie in einer Ebene exakt wieder, die durch die optische Achse und Längsrichtung der Modulatoranordnung aufgespannt wird.

In der Radartechnik liegen die Empfangsfrequenzen in einem Bereich, der eine Verwendung von in Längsrichtung aneinandergereihten Bragg-Zellen als Modulatoranordnung gestattet. Die Bragg-Zellen werden von den Empfangssignalen der Einzelelemente der Empfangsanordnung angesteuert. Zusätzlich zu den Phasenbeziehungen der Empfangssignale, die den Lichtstrahlen aufgeprägt werden, verlassen die Lichtstrahlen die Modulatoranordnung unter sog. Bragg-Winkeln, die in einer durch optische Achse und Achse der Zylinderlinse aufgespannten Ebene liegen. Die Achse der Zylinderlinse liegt parallel zur Ausbreitungsrichtung der die Bragg-Zellen durchlaufenden akustischen Wellen, mit der das Beugungsgitter der Bragg-Zelle eingestellt wird. Entsprechend der Frequenz oder Wellenlänge des die Bragg-Zelle ansteuernden Empfangssignals werden die einfallenden Lichstrahlen gebeugt. Das die Modulatoranordnung verlassende Lichtwellenfeld gibt die empfangene Wellenenergie nach Frequenz und Phase wieder.

Nach einer vorteilhaften Weiterbildung der erfindungsgemäßen Vorrichtung nach Anspruch 4 wird in den Strahlengang zwischen Modulatoranordnung und Zylinderlinse eine zweite zylinderische Sammellinse eingebracht, deren Hochachse parallel zur Längsrichtung und senkrecht zur optischen Achse und zur Achse der Zylinderlinse ausgerichtet ist. Mit der zylindrischen Sammellinse werden die Lichtstrahlen in ihrer Brennebene fokussiert. Die Brennebene liegt parallel zur Detektoranordnung. Es bilden sich Streifen aus, die parallel zur Achse der Zylinderlinse liegen. Ihre Höhe gibt die Frequenz der empfangenen Wellenenergie an. Die zylindrische Sammellinse bewirkt eine Frequenzanalyse der Empfangssignale, da die Austrittswinkel der die Modulatoranordnung verlassenden Lichstrahlen frequenzabhängig sind.

Die Phasenbeziehungen der Lichtstrahlen gehen durch die Fokussierung nicht verloren. Mit einer optischen Elementenmatrix in der Brennebene der zylindrischen Sammellinse, beispielsweise in Form einer GRIN-Optik, wird aus den fokussierten Lichtstrahlen wieder paralleles Licht erzeugt, das in der nachgeordneten Zylinderlinse in der Ebene der Detektoranordnung gebündelt wird. Ist die Brennweite der Zylinderlinse oder der Abstand zur Detektoranordnung richtig eingestellt, so erhält man in vorteilhafter Weise eine Abbildung auf der Detektoranordnung, die parallel zur Längsrichtung ein Maß für Peilung und Entfernung und senkrecht dazu ein Maß für die Frequenz des Empfangssignals angibt, wobei die eingestellte Brennweite in die Bestimmung von Peilung und Entfernung ebenfalls eingeht. Durch die Verwendung nur zweier getrennter, in senkrecht zueinander liegenden Ebenen fokussierenden Linsen erhält man also drei Zieldaten, nämlich Peilung, Entfernung und Frequenz.

Bei der vorteilhaften Weiterbildung nach Anspruch 5 ist man frei in der Wahl der geometrischen Anordnung von Zylinderlinse und zylinderischer Sammellinse, so daß der Aufbau den zur Verfügung stehenden einzelnen, optischen Bauelementen angepaßt werden kann. Auch der Einsatz einer Punktquelle mit nachgeordneter sphärischer Linse nach Anspruch 6 zum Aufweiten des die Modulatoranordnung beleuchtenden Lichts ist möglich.

Bei einer Verwendung einer linienförmigen Lichtquelle nach Anspruch 7 wird die Modulatoranordnung über eine zylindrische Linse beleuchtet, die gemäß der vorteilhaften Weiterbildung nach Anspruch 8 auch gegen die Zylinderlinse austauschbar ist. Der Vorteil dieser Anordnung nach Anspruch 8 bei Verwenden einer Zylinderlinse mit variierbarer Brennweite vor der Modulatoranordnung besteht insbesondere darin, daß die Modulatoranordnung, die zylindrische Linse und die Detektoranordnung einen kompakten, einmal zu justierenden Aufbau oder einen integrierten optischen Baustein bilden. Daß die Modulatoranordnung beleuchtende Licht wird durch die Variation der Brennweite der Zylinderlinse so eingestellt, daß die die Modulatoranordnung verlassenden Lichtstrahlen parallel sind und ebene Wellenfronten bilden. Die Nahfeldkrümmung der über die Empfangsanordnung empfangenen Wellenenergie wird durch entgegengesetzt gekrümmte Wellenfronten des die Modulatoranordnung beleuchtenden Lichts kompensiert. Die Kompensation wird durch das Fokussieren der Zylinderlinse bewirkt und ist durch die Schärfe der Abbildung einstellbar.

Benötigt man bei einer optischen Anordnung gemäß Anspruch 7 und 8 zusätzlich zur Peilungs- und Entfernungsbestimmung, beispielsweise beim Einsatz in der Radartechnik, eine Frequenzanalyse des Empfangssignals, so wird die zylindrische Sammellinse und optische Elementenmatrix auf der optischen Achse hinter der Modulatoranordnung einjustiert und bildet zusammen mit der nachfolgenden zylindrischen Linse und Detektoranordnung eine Einheit.

Der Vorteil der Weiterbildung der erfindungsgemäße Vorrichtung nach Anspruch 9 besteht darin, daß durch Einfügen eines Prismas in die optische Anordnung Wellenenergie aus einer ausgewählten Empfangsrichtung an einem vorbestimmten Platz, vorzugsweise in der Mitte, der Detektoranordnung abgebildet wird und somit leicht erkennbar ist. Insbesondere bei Überwachungsaufgaben eines Meergebietes oder eines Luftraums ist diese optische Signalverarbeitung von Vorteil. Der Phasengang des Prismas bzw. sein Keilwinkel wird durch die geometrische Verteilung der Einzelelemente längs einer Geraden auf der Empfangsanordnung und die ausgewählte Empfangsrichtung unter Berücksichtigung des Maßstabs eingestellt. Besonders vorteilhaft wird das Prisma gemäß Anspruch 10 vor der Modulatoranordnung in den Strahlengang eingebracht, so daß das die Modulatoranordnung verlassende Licht bei Empfang von Wellenenergie aus der eingestellten Empfangsrichtung konphas parallel zur optischen Achse in der durch Längsrichtung und optische Achse aufgespannten Ebene die Modulatoranordnung verläßt und durch die nachfolgende Zylinderlinse in der Mitte der Detektoranordnung fokussiert wird, nachdem die Brennweite der Zylinderlinse entsprechend der Entfernung des Ziels eingestellt worden ist.

Die erfindungsgemäße Vorrichtung ist ebenfalls vorteilhaft bei einer flächigen Empfangsanordnung einzusetzen.

Die Einzelelemente werden dann in ein Raster aus Spalten und Zeilen aufgeteilt und den Spalten und Zeilen Modulatoranordnungen zugeordnet. Die Zylinderlinse wird durch eine Kugellinse ersetzt. Die Abbildung auf der Detektoranordnung ist dann punktförmig und nicht mehr streifenförmig und liefert einen Peilwinkel in Azimut und Elevation.

Der Vorteil bei einer Einfügung einer Phasenplatte gemäß der erfindungsgemäßen Weiterbildung nach Anspruch 11 besteht insbesondere darin, daß Zieldaten auch bei Verwendung von Empfangsanordnungen beliebiger Konfiguration, beispielsweise auf gekrümmten Linien oder Flächen schnell und sicher optisch bestimmbar sind.

Der beispielsweise in der Sonartechnik oft geforderte Einbau einer Sonarbasis längs der Außenkontur eines Schiffes oder U-Bootes bringt hier bei der Bestimmung der Zieldaten aus der empfangenen, akustischen Wellenenergie keine Einschränkungen und auch keine Aufweitung der Signalverarbeitung mit sich, da die durch den Einbau ortsbedingten Phasenverschiebungen der Empfangssignale an den Einzelelementen durch inversen Phasengang der Phasenplatte aufgehoben werden.

Besonders vorteilhaft ist es, das die Modulatoranordnung beleuchtende Licht entsprechend zu beeinflussen und die Phasenplatte gemäß Anspruch 12 anzuordnen.

Der Vorteil der erfindungsgemäßen Weiterbildung nach Anspruch 13 besteht insbesondere darin, daß eine Matrix aus Einzelmodulatoren als Phasenplatte einfach ansteuerbar und temperaturunempfindlich ist und unterschiedlichen Aufgabenstellungen bei unterschiedlichen Empfangsanordnungen angepaßt werden kann.

Da die Konfiguration der Empfangsanordnung sich im Laufe des Betriebs einer Ortungsanlage nicht ändert, ist es besonders vorteilhaft, die Phasenplatte gemäß Anspruch 14 als Folie auszubilden. Die Dickenverteilung der Folie bewirkt durch unterschiedliche Brechungsindizes oder unterschiedliche geometrische Wege eine entsprechende Phasenverschiebung der austretenden Lichtstrahlen gegeneinander, die entgegengesetzt der Phasenverschiebung der Empfangssignale der Einzelelemente ausgelegt ist, so daß eine ortsabhängige Phasenkompensation der Empfangssignale aufgrund des Einbauorts des Einzelelements auf der Empfangsanordnung gewährleistet ist.

Dieser ortsabhängigen, optischen Phasenkompensation schließt sich dann eine Raumfrequenzanalyse zur Richtungsbestimmung mit Hilfe der Zylinderlinse an.

Zur Verringerung von Nebenzipfeln der Empfangsanordnung wird ein "Shading" der Empfangssignale vorteilhaft optisch gemäß der Weiterbildung der erfindungsgemäßen Vorrichtung nach Anspruch 15 durchgeführt. Ein Amplitudenfilter wird beispielsweise vor der Modulatoranordnung in den Strahlengang eingefügt, dessen Schwärzungsverteilung dem Einbauort der Einzelelemente auf der Empfangsanordnung maßstäblich angepaßt ist.

Bei Einsatz der erfindungsgemäßen Vorrichtung in der Sonartechnik werden gemäß der vorteilhaften Weiterbildung nach Anspruch 16 Lichtleiterhydrophone vom Interferometertyp, beispielsweise nach dem Mach-Zehnder-Prinzip, verwendet. Solche Lichtleiterhydrophone sind unter anderem aus der DE-OS 33 31 712 bekannt. Jedes Lichtleiterhydrophon ersetzt das Einzelelement und den zugehörigen Einseitenbandmodulator, da die Einwirkung der vom Ziel abgestrahlten Wellenenergie, nämlich des Schallfeldes, eine Brechungsindex- und Längenänderung in der einen Lichtleitfaser, die den Meßzweig bildet, gegenüber der zweiten Lichtleitfaser, die den Referenzzweig bildet, und somit eine Phasenverschiebung bewirkt. Der das Lichtleiterhydrophon verlassende Lichtstrahl, der durch Überlagerung der beiden Lichtwellen im Meßzweig und im Referenzzweig gewonnen wird, gibt die Phase des Empfangssignals wieder. Die Ausgänge der Lichtleiterhydrophone werden maßstabsgerecht so angeordnet, daß sie die Empfangsanordnung nachbilden. Die austretenden Lichtstrahlen werden, beispielsweise über eine nachgeordnete GRIN-Optik, der Zylinderlinse oder bei flächiger Anordnung der Kugellinse zugeführt. Der besondere Vorteil der Vorrichtung nach Anspruch 16 besteht darin, daß die Übertragung der Phaseninformation der Empfangssignale auf Licht unmittelbar schon durch das Lichtleiterhydrophon selbst vorgenommen wird und somit das Lichtleiterhydrophon die Modulatoranordnung in sich einschließt.

Die Erfindung ist anhand von in der Zeichnung dargestellten Ausführungsbeispielen einer Vorrichtung zum Bestimmen von Zieldaten aus vom Ziel reflektierter oder erzeugter und abgestrahlter Wellenenergie nachfolgend näher beschrieben. Es zeigen in schematischer Darstellung:

| | |
|---|---|
| Fig. 1 | Empfangsanordnung und optischem Aufbau zum Bestimmen von Peilungen und Entfernungen in perspektivischer Darstellung, |
| Fig. 2 | eine Aufsicht des Aufbaus nach Fig. 1, |
| Fig. 3a und 3b | eine optische Vorrichtung mit geneigter Detektoranordnung in perspektivischer Darstellung und Seitenansicht, |
| Fig. 4 | eine Erweiterung des optischen Aufbaus nach Fig. 2 zur Richtungsselektion, |
| Fig. 5 | eine Modifizierung des optischen Aufbaus nach Fig. 2 für Empfangsanordnungen mit be- |

liebiger Formgebung,

Fig. 6          eine optische Vorrichtung zum zusätzlichen Bestimmen der Frequenz der empfangenen Wellenenergie in perspektivischer Darstellung und

Fig. 7          eine Seitenansicht der Vorrichtung nach Fig. 6.

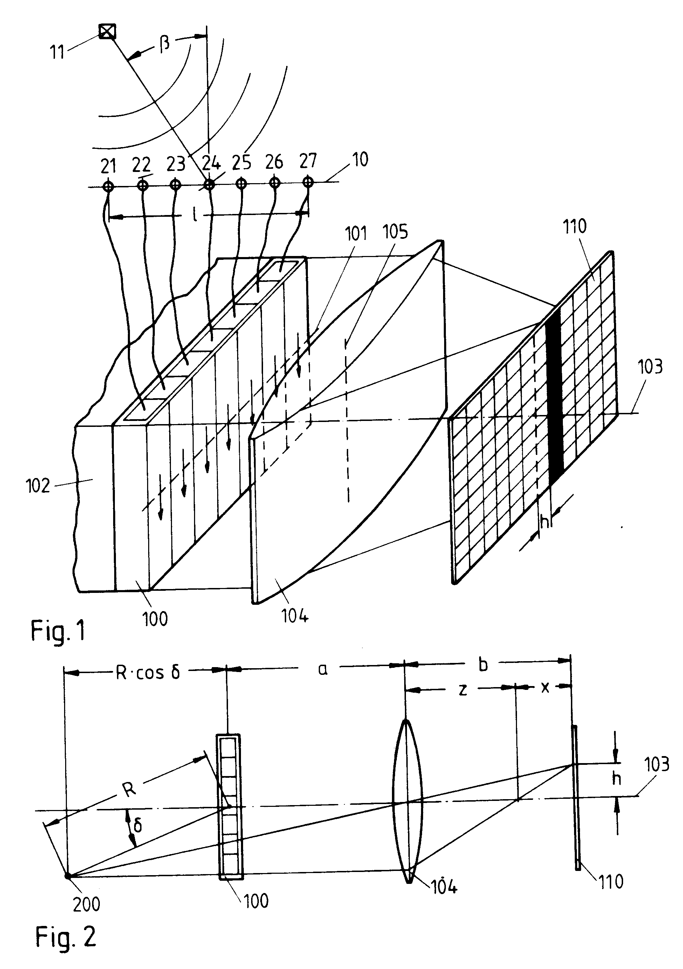

Fig. 1 zeigt eine ebene Empfangsanordnung 10, die Wellenenergie unter einem Peilwinkel $\beta$ von einem Ziel 11 empfängt. Das Ziel 11 befindet sich in einer Entfernung $\rho$ zur Empfangsanordnung 10. Die Empfangsanordnung 10 weist auf einer Geraden sieben Einzelempfänger 21 bis 27 auf. Das Ziel 11 befindet sich im sog. Nahbereich der Empfangsanordnung 10, nämlich in einer Entfernung, die kleiner als die Fresnelgrenze für das Nahfeld ist. Die Fresnelgrenze wird durch die Länge L der Empfangsanordnung 10 und die Frequenz f oder Wellenlänge $\lambda$ der empfangenen Wellenenergie bestimmt: $\rho \leqq 2{,}5 \cdot \dfrac{L^2}{\lambda}$. Befindet sich das Ziel 11 jenseits der Fresnelgrenze so empfängt die Empfangsanordnung eine ebene Wellenfront. Befindet sich das Ziel 11 jedoch im Nahfeld, so wird eine gekrümmte, kugelförmige Wellenfront empfangen, d.h. die Empfangssignale der Einzelelemente 21 bis 27 weisen keine linear wachsende Phasenverschiebung gegeneinander auf.

Die Empfangssignale der sieben Einzelelemente 21 bis 27 werden ggf. nach Verstärkung und Filterung sieben Einseitenbandmodulatoren einer optischen Modulatoranordnung 100 zugeführt. Die Einseitenbandmodulatoren der optischen Modulatoranordnung 100 sind nebeneinander in Längsrichtung 101 angeordnet und werden von kohärentem Licht 102 beleuchtet. Senkrecht zur Längsrichtung 101 befindet sich die optische Achse 103 der optischen Vorrichtung, mit der Peilwinkel $\beta$ und Entfernung $\rho$ zum Ziel 11 bestimmt werden. Auf der optischen Achse 103 befindet sich eine Zylinderlinse 104; deren Achse 105 senkrecht zur optischen Achse 103 und senkrecht zur Längsrichtung 101 angeordnet ist. Die Zylinderlinse 104 bündelt einfallendes paralleles Licht in ihrer Brennebene, die senkrecht zur optischen Achse 103 liegt.

Von der Empfangsanordnung 10 wird eine Kugelwelle empfangen. Da die Empfangssignale der Empfangsanordnung 10 die Modulatoranordnung 100 ansteuern, weist das die Modulatoranordnung 100 verlassende Licht ebenfalls gekrümmte Wellenfronten auf. Die Modulatoranordnung 100 wirkt wie eine Zerstreuungslinse, die mit parallelem Licht beleuchtet wird. Das die Modulatoranordnung verlassende Licht bereitet sich so aus, als ob sich eine Lichtquelle vor einer Zerstreuungslinse in einem endlichen Abstand befindet und ein virtuelles Lichtziel bildet. Das die Modulatoranordnung 100 verlassende Licht wird durch die Zylinderlinse 104 fokussiert. Es entsteht ein Streifen, der dann scharf auf der Detektoranordnung 110 abgebildet ist, wenn die Detektoranordnung 110 sich in einem größeren Abstand als dem Fokusabstand zur Zylinderlinse 104 befindet und die optische Abbildungsgleichung erfüllt ist. Die Verschiebung der Detektoranordnung 110 aus dem Fokusabstand zu einem größeren Abstand ist immer dann vorzunehmen, wenn das Ziel 11 vom Fernfeld in den Nahfeldbereich eintritt. Ab dann ist eine exakte Bestimmung der Entfernung $\rho$ zum Ziel 11 möglich. Solange sich das Ziel 11 im Fernfeld befindet, erreicht die Empfangsanordnung 10 eine ebene Wellenfront und das die Modulatoranordnung 100 verlassende Licht weist ebenfalls eine ebene Wellenfront auf, die in der Brennebene der Zylinderlinse 104 fokussiert wird und dort zu einer scharfen streifenförmigen Abbildung führt.

Befindet sich das Ziel 11 querab zur Empfangsanordnung 10, dann erfolgt die Fokussierung mittig auf der Detektoranordnung 110, und zwar senkrecht zur optischen Achse 103 als Streifen parallel zur Achse 105. Bei einer Auswanderung des Ziels 11 bis unter eine Peilung $\beta$ wandert ebenfalls der Streifen parallel zur Längsrichtung 101 auf der Detektoranordnung 110 aus. Die Ablage von der Mitte ist mit h beziechnet.

Fig. 2 zeigt eine Aufsicht des optischen Aufbaus nach Fig. 1 zur Erläuterung der Bestimmung von Entfernung $\rho$ und Peilung $\beta$ aus dem Abstand z+x der Detektoranordnung 110 zur Achse 105 der Zylinderlinse 104 und der Ablage h. Die Zylinderlinse 104 weist eine Brennweite z auf und befindet sich im Abstand a zur Modulatoranordnung 100. Ein virtuelles Lichtziel 200 ist im Abstand R vor der Modulatoranordnung 100 unter einem Winkel $\delta$ zur optischen Achse 103 eingezeichnet. Unter Berücksichtigung eines Maßstabsfaktors M, der für die geometrische Beziehung zwischen der Empfangsanordnung 10 und der Modulatoranordnung 100 gilt, bestimmt sich

$$\frac{\sin \delta}{\sin \beta} = \frac{\lambda L}{\lambda} \cdot M,$$

wobei $\lambda_L$ die Lichtwellenlänge ist. Nach Anwendung der Abbildungsgleichung für Linsen und des Strahlensatzes erhält man folgende Zusammenhänge, um Entfernung $\rho$ und Peilung $\beta$ aus den Meßdaten h und x zu bestimmen:

$$\rho = R \frac{\lambda_L}{\lambda} \cdot M^2 = \frac{\lambda_L}{\lambda \cdot x} \cdot M^2 \sqrt{h^2 \cdot z^2 + (z^2 - ax + xz)^2},$$

$$\beta = \arcsin \frac{\lambda}{\lambda_L \cdot M} \cdot \frac{h \cdot z}{\sqrt{h^2 \cdot z^2 + (z^2 - ax + xz)^2}}.$$

Die Berechnung von Entfernung $\rho$ und Peilung $\beta$ vereinfacht sich, wenn der Abstand a zwischen Zylinder-

EP 0 322 502 B1

linse 104 und Modulatoranordnung gerade gleich der Brennweite z gewählt ist

$$\rho = \frac{\lambda_L}{\lambda \cdot x} \cdot M^2 \cdot z \sqrt{h^2 + z^2},$$

$$\beta = \arc \sin \frac{\lambda}{\lambda_L} \cdot M \frac{h}{\sqrt{h^2 + z^2}}.$$

Befinden sich mehrere Ziele vor der Empfangsanordnung 10, so werden nacheinander die Meßdaten h und x durch jeweilige Scharfeinstellung ermittelt.

Anstelle der Variation des Abstandes der Detektoranordnung 110 zur Zylinderlinse 104 auf der optischen Achse 103 ist es vorteilhaft, eine Zylinderlinse 104 mit variabler Brennweite zu verwenden. Die Berechnung von Peilung und Entfernung ist dann in gleicher Weise anzustellen, wie bei einem Verrücken der Detektoranordnung 110 bei konstanter Brennweite der Zylinderlinse 104.

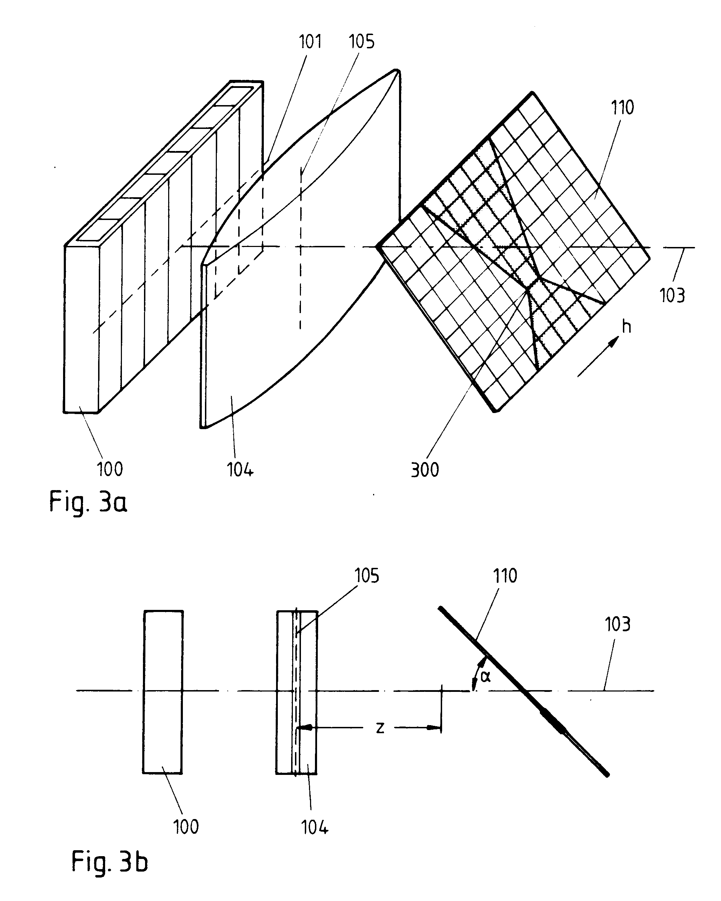

Fig.3a,b zeigt perspektivisch und in Seitenansicht einen optischen Aufbau aus Modulatoranordnung 100, Zylinderlinse 104 und Detektoranordnung 110. Die Detektoranordnung 110 ist nicht senkrecht zur optischen Achse 103 in einer Ebene angeordnet, die durch eine Parallele zur Längsrichtung 101 und die Achse 105 der Zylinderlinse 104 aufgespannt wird, sondern unter einem Neigungswinkel $\alpha$. Die Zylinderlinse 104 hat eine feste Brennweite z. Die obere Kante der Detektoranordnung 110 befindet sich in der Brennebene der Zylinderlinse 104. Der in Fig. 1 gezeigte Streifen hat seine Gestalt durch die Neigung der Detektoranordnung verändert und weist eine Einschnürung 300 auf, die die Meßdaten h und z+x liefert. Unter Berücksichtigung des Neigungswinkels $\alpha$ sind dann wieder die Entfernung $\rho$ und die Peilung $\beta$ zum Ziel bestimmbar. Die Anzeige mehrerer Ziele erfolgt hier gleichzeitig.

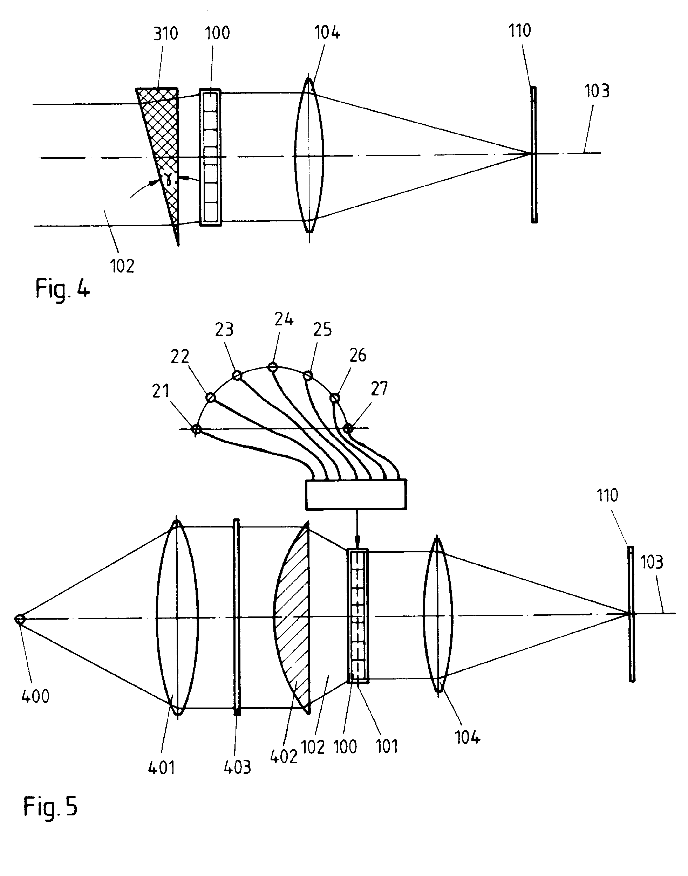

Fig. 4 zeigt die Aufsicht einer erweiterten optischen Anordnung für Überwachungsaufgaben gemäß Fig. 2. Vor der Modulatoranordnung 100 befindet sich auf der optischen Achse 103 in der Ebene, die durch die Längsrichtung 101 der Modulatoranordnung 100 und die optische Achse 103 aufgespannten Ebene ist, ein Prisma 310. Das Prisma 310 weist einen durch einen Keilwinkel $\gamma$ gekennzeichneten Keil in dieser Ebene auf. Durch die Wahl des Keilwinkels $\gamma$ ist eine bevorzugte Empfangsrichtung einstellbar. Immer wenn ein Ziel unter der Peilung dieser eingestellten Empfangsrichtung erscheint, wird ein heller Streifen auf der Detektoranordnung 110 in der Mitte erscheinen. Die Detektoranordnung 110 ist hier senkrecht angeordnet.

Befinden sich die Einzelelemente 21 bis 27 der Empfangsanordnung nicht auf einer Geraden, sondern auf einer beliebig geformten Linie, die beispielsweise durch die Außenkontur eines Trägerfahrzeugs gegeben ist, so werden die durch die Geometrie oder Außenkonturen bedingten Phasenverschiebungen der Empfangssignale gegeneinander durch eine Phasenplatte im optischen Aufbau kompensiert. Fig. 5 zeigt einen solchen optischen Aufbau als Aufsicht für eine einem Kreisbogen folgende Empfangsanordnung mit den Einzelelementen 21 bis 27, die die Modulatoranordnung 100 ansteuern. Auf der optischen Achse 103 befindet sich vor der Modulatoranordnung 100 eine linienförmige Lichtquelle 400 mit nachgeordneter zylindrischer Linse 401 und eine Phasenplatte 402 mit einer ortsabhängigen Phasenfunktion, die die Phasenverschiebung der Empfangssignale aufgrund der Anordnung der Einzelempfänger 21 bis 27 auf dem Kreisbogen und nicht auf der Sehne mit umgekehrten Vorzeichen dem die Modulatoranordnung 100 beleuchtenden Licht 102 aufgeprägt. Das beleuchtende Licht 102 ist nicht mehr parallel, sondern weist konvergierende Strahlen auf, um die durch die Ansteuerung der Empfangssignale entstehende Divergenz aufzuheben, wenn die Einzelempfänger 21 bis 27 Wellenenergie in ebener Wellenfront empfangen. Bei Empfangen aus dem Nahfeld ist das die Modulatoranordnung 100 verlassende Licht genauso divergent, als wenn die Einzelelemente 21 bis 27 der Empfangsanordnung auf der Sehne und nicht auf dem Kreisbogen angeordnet wären. Mit der Zylinderlinse 104 werden die Lichtstrahlen fokussiert und auf der Detektoranordnung 110 nach entsprechender Scharfstellung abgebildet.

Das die Phasenplatte 402 beleuchtende parallele Licht wird in seiner Amplitude durch ein Amplitudenfilter 403 beeinflußt. Das Amplitudenfilter weist eine ortsabhängige Schwärzungsverteilung auf, die einem individuellen "Shading" der Empfangssignale der Einzelelemente 21 bis 27 zur Nebenzipfelunterdrückung entspricht. Der bisherige optische Aufbau ist sowohl realisierbar mit einer Modulatoranordnung 100, bestehend aus Bragg-Zellen, die als Einseitenbandmodulatoren betrieben werden, wenn die Frequenz der Empfangssignale hoch genug ist, (Radartechnik), als auch mit einer Modulatoranordnung 100, deren Einseitenbandmodulatoren entsprechend der deutschen Patentanmeldung P 37 39 101.1 aufgebaut sind und somit auch Empfangssignale beliebig niedriger Frequenzen als oberes oder unteres Seitenband liefern.

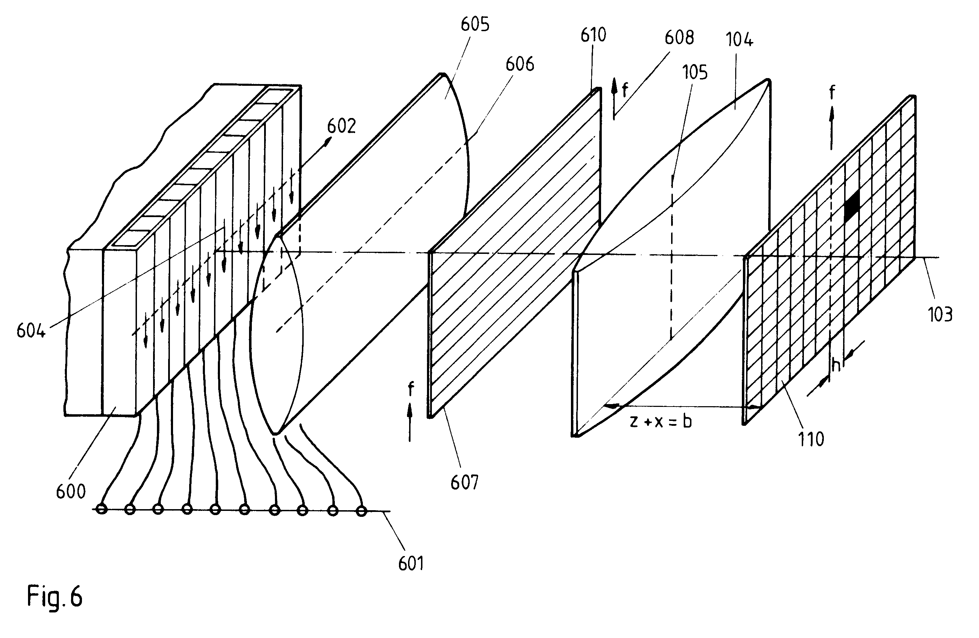

Der in Fig. 6 gezeigte optische Aufbau setzt voraus, daß die Austrittswinkel der die Modulatoranordnung 100 verlassenden Lichtstrahlen frequenzabhängig ist. Die Modulatoranordnung 600 besteht aus in Längsrichtung 101 aufgereihten Bragg-Zellen, die von Empfangssignalen einer Empfangsanordnung 601 angesteuert werden. Die Frequenz der Empfangssignale beträgt einige 100 Megahertz. Die Modulatoranordnung 600 wird mit kohärentem Licht beleuchtet. Das die Modulatoranordnung 600 verlassende Licht weist abhängig von der Frequenz der Empfangssignale aufgrund der Bragg-Beugung frequenzabhängige Austrittswinkel in einer Ebe-

7

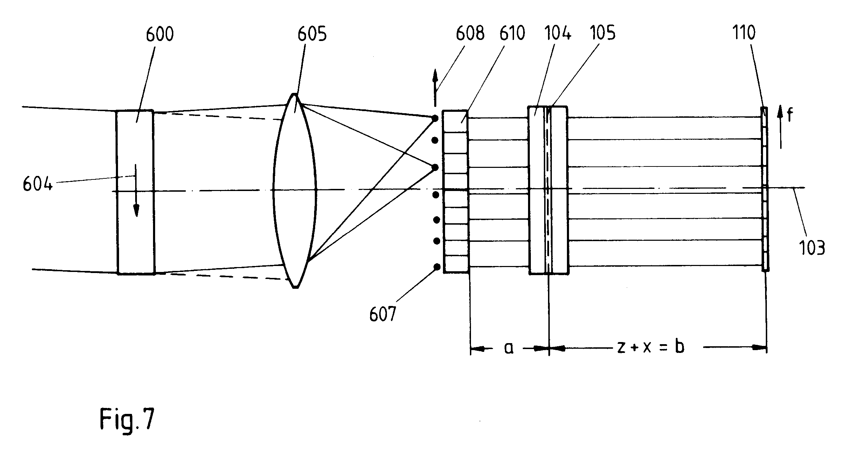

ne auf, die durch die optische Achse 103 und die Ausbreitungsrichtung 604 der das Beugungsgitter einstellenden akustischen Welle in der Modulatoranordnung 600 aufgespannt wird. Der Modulatoranordnung 600 ist eine zylindrische Sammellinse 605 nachgeordnet, deren Hochachse 606 parallel zur Längsrichtung 602 der Modulatoranordnung 600 und senkrecht zur optischen Achse 103 liegt. Die zylindrische Sammellinse 605 fokussiert die Lichtstrahlen in einer Brennebene 607 derart, daß abhängig von der Frequenz ein Streifenmuster in Richtung einer Frequenzachse 608 entsteht, die einen rechten Winkel zur optischen Achse 103 und zur Längsrichtung 602 aufweist. In der Brennebene 607 ist eine optische Elementenmatrix in Form einer GRIN-Optik 610 angeordnet. In Fig. 7 ist eine zugehörige Seitenansicht des in Fig. 6 gezeigten optischen Aufbaus angegeben. Die die GRIN-Optik 610 verlassenden Lichtstrahlen besitzen die gleichen Phasenbeziehungen wie die in der Brennebene 607 fokussierten Lichtstrahlen, die mit der nachgeordneten Zylinderlinse 104, wie bereits im Zusammenhang mit Fig. 1 beschrieben, auf der Detektoranordnung 110 fokussiert werden. Es entsteht kein Streifen sondern eine in Längsrichtung 602 und in Richtung der Frequenzachse 608 begrenzte Abbildung, dessen Lage in der Ebene der Detektoranordnung die Ablage h und die Frequenz f angibt. Der Abstand der Detektoranordnung 110 und/oder die Brennweite z der Zylinderlinse 104 auf der optischen Achse 103 liefert dann zusammen mit der Ablage h Entfernung und Peilung zum Ziel.

**Patentansprüche**

1. Vorrichtung zum Bestimmen von Zieldaten - wie Peilung, Entfernung, Frequenz - aus vom Ziel reflektierter oder erzeugter und abgestrahlter Wellenenergie mit einer Empfangsanordnung aus Einzelelementen zum Empfangen und Umwandeln in Empfangssignale, einer kohärenten Lichtquelle (102) und einer von den Empfangssignalen ansteuerbaren, akusto-optischen Modulatoranordnung (100, 600) wobei die Modulatoranordnung (100, 600) in ihrer Längsrichtung (101, 602) senkrecht zu ihrer optischen Achse (103) und dem parallel einfallenden Licht der Lichtquelle (102), aus einer Reihe von nebeneinander angeordneten, akusto-optischen Einseitenbandmodulatoren (21-27) besteht, deren Träger das Licht und deren aufzumodulierende Signale die Empfangssignale sind, und mit einer mindestens in einer Ebene bündelnden Linse (104) für das die Modulatoranordnung (100, 600) verlassende Licht, wobei die Achse der Linse (105) senkrecht zur optischen Achse (103) und senkrecht zur Längsrichtung (101, 602) der Modulatoranordnung (100, 600) ausgerichtet ist, und mit einer flächigen Detektoranordnung (110) auf der optischen Achse (103) zum Abbilden des gebündelten Lichts für eine Peilungsanzeige, wobei die Normale der Detektoranordnung (110) in einer durch die optische Achse (103) und die Achse (105) der Linse (104) aufgespannten Ebene liegt, dadurch gekennzeichnet, daß die Linse (104) eine Zylinderlinse (104) auf der optischen Achse (103) ist, daß die Brennweite (z) der Zylinderlinse (104) und/oder der Abstand (z+x) zur Detektoranordnung (110) auf der optischen Achse (103) einstellbar sind und nach Scharfeinstellung der Abbildung des Zieles auf der Detektoranordnung (110) die eingestellte Brennweite (z) und/oder der Abstand (z+x) zur Detektoranordnung (110) sowie die Ablage (h) der Abbildung des Zieles von der optischen Achse (103) parallel zu der Längsrichtung (101, 602) der Modulatoranordnung (100, 600) ein Maß für die Entfernung (ρ) und Peilung (β) zum Ziel (11) sind.

2. Vorrichtung nach Anspruch 1, dadurch gekennzeichnet, daß die Normale der Detektoranordnung (110) in Richtung der optischen Achse (103) weist.

3. Vorrichtung nach Anspruch 1, dadurch gekennzeichnet, daß die Zylinderlinse (104) eine feste Brennweite (z) aufweist, daß die Detektoranordnung (110) im Abstand (z) der Brennweite auf der optischen Achse (103) angeordnet ist und ihre Normale einen Neigungswinkel (α) zur optischen Achse (103) aufweist.

4. Vorrichtung nach einem der Ansprüche 1 oder 2, dadurch gekennzeichnet, daß die Einseitenbandmodulatoren der Modulatoranordnung (600) Bragg-Zellen sind, daß zwischen Modulatoranordnung (600) und Zylinderlinse (104) eine zylindrische Sammellinse (605) angeordnet ist, deren Hochachse (606) parallel zur Längsrichtung (602) der Modulatoranordnung (600) ausgerichtet ist, daß in der Brennebene (607) der Sammellinse (605) eine optische Elementenmatrix (610) zur Erzeugung parallelen Lichts aus den durch die Sammellinse (605) fokussierten Lichtstrahlen vorgesehen ist mit einer Anzeige der Frequenz (f) der Empfangssignale auf der Detektoranordnung (110) senkrecht zur Hochachse (606) der zylindrischen Sammellinse (605) und parallel zur Achse (105) der Zylinderlinse (104).

5. Vorrichtung nach Anspruch 4, dadurch gekennzeichnet, daß die Zylinderlinse (104) und die Sammellinse (605) bezüglich ihrer Anordnung auf der optischen Achse (103) austauschbar sind.

6. Vorrichtung nach einem der Ansprüche 1 bis 5, dadurch gekennzeichnet, daß eine Punktquelle mit nachgeordneter sphärischer Linse das die Modulatoranordnung (100) beleuchtende Licht liefert.

7. Vorrichtung nach einem der Ansprüche 1 bis 5, dadurch gekennzeichnet, daß eine linienförmige Lichtquelle (400) mit nachgeordneter zylindrischer Linse (401) das die Modulatoranordnung (100) beleuchtende Licht liefert.

8. Vorrichtung nach Anspruch 7, dadurch gekennzeichnet, daß die zylindrische Linse (401) und die Zylinderlinse (104) austauschbar sind.

9. Vorrichtung nach Anspruch 8, dadurch gekennzeichnet, daß bei Verwendung einer Empfangsanordnung (10), deren Einzelelemente (21, 22, ..., 27) in einer Geraden angeordnet sind, im parallelen Strahlengang in einer Ebene, die durch die optische Achse (103) und die Längsrichtung (101) aufgespannt ist, mindestens ein Prisma (310) vorgesehen ist und der Phasengang des Prismas (310) entsprechend einer vorgebbaren Empfangsrichtung einstellbar ist.

10. Vorrichtung nach Anspruch 9, dadurch gekennzeichnet, daß das Prisma (310) auf der optischen Achse (103) vor der Modulatoranordnung (110) angeordnet ist.

11. Vorrichtung nach einem der Ansprüche 1 bis 8, dadurch gekennzeichnet, daß bei Verwendung einer beliebig geformten Empfangsanordnung im parallelen Strahlengang eine Phasenplatte (402) vorgesehen ist, daß ihre Normale in einer Ebene liegt, die durch die optische Achse (103) und die Längsrichtung (101) aufgespannt ist, daß der Phasenplatte (402) eine ortsabhängige Phasenfunktion entsprechend der Formgebung der Empfangsanordnung unter Berücksichtigung des Maßstabs aufgeprägt ist, wobei die durch die Formgebung hervorgerufene Phasenverschiebung eines Empfangssignals an einem der Einzelelemente (21 bzw. 22, ..., bzw. 27) durch die Phasenfunktion der Phasenplatte kompensierbar ist.

12. Vorrichtung nach Anspruch 11, dadurch gekennzeichnet, daß die Phasenplatte (402) auf der optischen Achse (103) vor der Modulatoranordnung (110) angeordnet ist.

13. Vorrichtung nach Anspruch 11 oder 12, dadurch gekennzeichnet, daß die Phasenplatte als Matrix aus ansteuerbaren Einzelmodulatoren ausgebildet ist und Steuersignale der Einzelmodulatoren gegenüber den durch die Formgebung hervorgerufenen Phasenverschiebungen inverse Phasenverschiebungen im Licht bewirken.

14. Vorrichtung nach Anspruch 10 oder 11, dadurch gekennzeichnet, daß die Phasenplatte (402) als Folie ausgebildet ist und die Phasenfunktion als Dickenverteilung realisiert ist.

15. Vorrichtung nach einem der Ansprüche 1 bis 14, dadurch gekennzeichnet, daß in dem parallelen Strahlengang ein ortsabhängiges Amplitudenfilter (403) angeordnet ist, dessen Schwärzungsverteilung einem "Shading" der Empfangssignale entspricht.

16. Vorrichtung nach einem der Ansprüche 1 bis 15, dadurch gekennzeichnet, daß auf der Empfangsanordnung Lichtleiterhydrophone mit Interferometeraufbau angeordnet sind, daß jedes Lichtleiterhydrophon ein Einzelelement auf der Empfangsanordnung und den zugeordneten Einseitenbandmodulator der Modulatoranordnung bildet.

## Claims

1. Device for determination of target data - such as bearing, range, frequency - from wave energy reflected by the target or generated and radiated by it, with a reception arrangement consisting of individual elements for reception and conversion into reception signals, a coherent light source (102) and an acousto-optical modulator arrangement (100, 600) driven by the reception signals, where the modulator arrangement (100, 600), which has its longitudinal direction (101, 602) perpendicular to its optical axis (103) and to the light arriving parallel from the light source (102), consists of a number of adjacent acousto-optical single-sideband modulators (21-27) whose carriers are the light and whose modulating signals are the reception signals, and with a lens (104) which is intended for the light leaving the modu-lator arrangement (100, 600) and performs focusing in at least one plane, the axis (105) of the lens being aligned perpendicular to the optical axis (103) and perpendicular to the longitudinal direc-tion (101, 602) of the modulator arrangement (100, 600), and with a two-dimensional detector arrange-ment (110) on the optical axis (103) to form an image of the focused light for a bearing display, the normal to the detector arrangement (110) lying in a plane containing the optical axis (103) and the axis (105) of the lens (104), characterised in that the lens (104) is a cylindrical lens (104) on the optical axis (103), that the focal length (z) of the cylindrical lens (104) and/or the distance (z+x) from the detector arrangement (110) on the optical axis (103) are adjustable and, after focus-ing of the image of the target on the detector arrangement (110), the adjusted focal length (z) and/or the distance (z+x) from the detector ar-rangement (110) and the displacement (h) of the image of the target from the optical axis (103) in the direction parallel to the longitudinal direc-tion (101, 602) of the modulator arrangement (100, 600) is a measure of the range ($\rho$) and bearing ($\beta$) of the target (11).

2. Device in accordance with claim 1, characterised in that the normal to the detector arrangement (110) points in the same direction as the optical axis (103).

3. Device in accordance with claim 1, characterised in that the cylindrical lens (104) has a fixed focal length (z), that the detector arrangement (110) is situ-ated on the optical axis (103) at a distance (z) equal to the focal length and its normal makes an angle of inclination ($\alpha$) with the optical axis (103).

4. Device in accordance with one of the claims 1 and 2, character-ised in that the single-sideband modulators of the modulator arrangement (600) are Bragg cells, that between the modulator arrangement (600) and the cylindrical lens (104) there is a cylindrical con-verging lens (605) whose vertical axis (606) is aligned parallel to the longitudinal direction (602) of the modulator arrangement (600), that in the focal plane (607) of the converging lens (605) there is an optical element matrix (610) provided to generate parallel light from the light beams focused by the converging lens (605), with a dis-play of the frequency (f) of the reception signals on the detector arrangement (110) perpendicular to the vertical axis (606) of the cylindrical con-verging lens (605) and parallel to the axis (105) of the cylindrical lens (104).

5. Device in accordance with claim 4, characterised in that the cylindrical lens (104) and the converging lens (605) can be interchanged on the optical axis (103).

6. Device in accordance with one of the claims 1 to 5, character-ised in that a point source followed by a spherical lens supplies the light which illuminates the modu-lator arrangement (100).

7. Device in accordance with one of the claims 1 to 5, character-ised in that a linear light source (400) followed by a cylindrical lens (401) supplies the light which illuminates the modulator arrangement (100).

8. Device in accordance with claim 7, characterised in that the cylindrical lens (401) and the cylindrical lens (104) are interchangible.

9. Device in accordance with claim 8, characterised in that, using a reception arrangement (10) having individual elements (21, 22, ..., 27) arranged in a straight line, the parallel ray-path contains at least one prism (310) in a plane containing the optical axis (103) and the longitudinal direction (101), and the phase characteristic of the prism (310) is adjust-able according to a definable reception direction.

10. Device in accordance with claim 9, characterised in that the prism (310) is situated on the optical axis (103) in front of the modulator arrangement (110).

11. Device in accordance with one of the claims 1 to 8, character-ised in that, using any configuration of reception arrangement, the parallel ray-path contains a retardation plate (402), that the normal to the retardation plate lies in a plane containing the optical axis (103) and the longitudinal direction (101), and that the retardation plate (402) has a position-dependent phase-function in accordance with the configuration of the reception arrange-ment, taking account of the scale, such that the phase shift produced by the configuration for a reception signal at one of the individual elements (21 or 22, ..., or 27) can be compensated by the phase function of the retardation plate.

12. Device in accordance with claim 11, characterised in that the retardation plate (402) is situated on the optical axis (103) in front of the modulator arrangement (110).

13. Device in accordance with claim 11 or 12, characterised in that the retardation plate is designed as a matrix con-sisting of drivable individual modulators and that, in the light, control signals of the individual modulators cause inverse phase-shifts compared to the phase shifts produced by the configuration.

14. Device in accordance with claim 10 or 11, characterised in that the retardation plate (402) is designed as a film and the phase function is achieved by a distribu-tion of thickness.

15. Device in accordance with one of the claims 1 to 14, charac-terised in that the parallel ray-path contains a position-dependent amplitude-filter (403) whose distribution of blackening corresponds to "shading" of the reception signals.

16. Device in accordance with one of the claims 1 to 15, character-ised in that there are optical waveguide hydro-phones with an interferometer structure situated on the reception arrangement, and that each optical waveguide hydrophone forms an individual element on the reception arrangement and forms the associated single-sideband modulator of the modulator arrangement.

## Revendications

1. Dispositif conçu pour déterminer des données de cible telles que - le relèvement, la distance, la fréquence - d'énergie d'onde réfléchie, ou produite et rayonnée par la cible et comprenant un groupe de réception constitué par des éléments individuels prévus pour recevoir et transformer en signaux de réception une source lumineuse cohérente (102) et par un groupe de modulateurs acousto-optique (100, 600) pouvant être activés par les signaux de réception auquel cas, le groupe de modulateur (100, 600), dont la direction longitudinale (101), 602) est perpendiculaire à son axe optique (103) ainsi qu'à la lumière venant en parallèle de la source lumineuse (102), est constitué d'une série de modulateurs à bande latérale unique acousto-optiques disposés côte à côte (21-27) dont l'onde porteuse est la lumière et dont les signaux de modulation sont les signaux de réception, et d'une lentille 104) prévue pour la lumière sortant du groupe de modulateurs (100, 600) focalisant au moins dans un plan, l'axe (105) de la lentille étant alignée de façon perpendiculaire à l'axe optique (103) et de nouveau perpendiculairement à la direction longitudinale (101, 602) du groupe de modulateurs (100), 600) et d'un groupe de détecteurs à deux dimensions (110) sur l'axe optique (103) en vue de former une image de la lumière focalisée pour un affichage de relèvement, auquel cas la normale par rapport au groupement de détecteurs (110) se trouve dans un plan renfermant l'axe optique (103) et l'axe (105) de la lentille (104) et caractérisé par le fait, que la lentille (104), est une lentille cylindrique (104) se trouvant sur l'axe optique (103), que la distance focale (z) de la lentille cylindrique (104) et/ou la distance (z+x) au groupe de détecteurs (110) sur l'axe optique (103) sont réglables et qu'après la mise au point nette de l'image de la cible, sur le groupe de détecteurs (110), la distance focale (z) réglée et/ou la distance (z+x) du groupe de détecteurs (110) et le décalage (h) de l'image de la cible de l'axe optique (103) en direction parallèle à la direction longitudinale (101), 602) du groupe de modulateurs (100, 600), est une mesure de la distance (ρ) et du relèvement (β) de la cible (11).

2. Dispositif conforme à la revendication 1, caractérisé par le fait que la normale du groupe de détecteurs (110) est orientée dans la même direction que l'axe optique (103).

3. Dispositif conforme à la revendication 1, caractérisé par le fait que la lentille cylindrique (104) présente une distance focale (z) fixe, que le groupe de détecteurs (110) est disposé sur l'axe optique (103) à une distance (z) égale à la distance focale et que sa normale présente un angle d'inclinaison (α) rapport à l'axe optique (103).

4. Dispositif conforme à l'une des revendications 1 ou 2, caractérisé par le fait que les modulateurs à bande latérale unique du groupe de modulateurs (600) sont des cellules Bragg, qu'entre le groupe de modulateurs (600) et la lentille cylindrique (104) se trouve une lentille convergente (605) cylindrique dont l'axe vertical (606) est aligné de façon parallèle sur la direction longitudinale (602) du groupe de modulateurs (600), que dans le plan de la focale (607) de la lentille convergente (605) se trouve une matrice d'éléments optique (610) destinée à produire la lumière parallèle à partir des faisceaux de rayons lumineux focalisés par la lentille convergente (605) avec affichage de la fréquence (f) des signaux de réception sur le groupede détecteurs (110) qui se présente de façon perpendiculaire à l'axe verticale (606) de la lentille convergente (605) et parallèlement à l'axe (105) de la lentille cylindrique (104).

5. Dispositif conforme à la revendication 4, caractérisé par le fait que la lentille cylindrique (104) ainsi que la lentille convergente (605) sont interchangeables sur l'axe optique (103).

6. Dispositif conforme à l'une des revendications 1 à 5, caractérisé par le fait qu'une source ponctuelle à lentille sphérique avale, fournit la lumière qui illumine le groupe de modulateurs (100).

7. Dispositif conforme à l'une des revendications 1 à 5, caractérisé par le fait qu'une source lumineuse linéaire (400) à lentille cylindrique avale (401), fournit la lumière qui illumine le groupe de modulateurs (100).

8. Dispositif conforme à la revendication 7, caractérisé par le fait que le la lentille cylindrique (401) ainsi que la lentille cylindrique (104), sont interchangeables.

9. Dispositif conforme à la revendication 8, caractérisé par le fait que lors d'une utilisation d'un groupe récepteur (10), à éléments individuels (21, 22,....27) disposés sur une ligne droite, le canal de lumière parallèle renferme au moins un prisme (310) dans un plan renfermant l'axe optique (103), la direction longitudinale (101) et que la caractéristique de phase du prisme (310) est réglable en fonction d'une direction de réception définissable.

10. Dispositif conforme à la revendication 9, caractérisé par le fait que le prisme (310) a été disposé sur l'axe optique (103) en face du groupement de modulateurs (110).

11. Dispositif conforme à l'une des revendications 1 à 8, caractérisé par le fait qu'en utilisant une quelconque configuration de groupe de réception, le canal de lumière parallèle renferme une lame de phase (402), que la normale de la lame de phase est située dans dans un plan renfermant l'axe optique (103) et la direction longitudinale (101) et que la lame de phase (402) dispose d'une fonction de phase en rapport avec sa position conforme à la configuration du groupe de réception compte tenu de l'échelle de manière à ce que le décalage de phase produit par la configuration pour un signal de réception à l'un des éléments individuels (21 ou 22,...ou 27) puisse être compensé par la fonction de phase de la lame de phase.

12. Dispositif conforme à la revendication 11, caractérisé par le fait que la lame de phase (402) est située sur l'axe optique (103) en face du groupe de modulateurs (110).

13. Dispsositif conforme à la revendication 11 ou 12 caractérisé par le fait que la lame de phase a été conçue sous forme de matrice constituée par des modulateurs individuels activables et que dans la lumière, les signaux de commande des modulateurs individuels produisent des décalages de phase inverses comparés aux décalages de phase produits par les configurations.

14. Dispositif conforme aux revendications 10 ou 11, caractérisé par le fait que la lame de phase (402) a été réalisée sous forme d'un film et que la fonction de phase est obtenue par une répartition d'épaisseur.

15. Dispositif conforme à l'une des revendications 1 à 14, caractérisé par le fait que le canal de lumière parallèle comprend un filtre d'amplitude (403) à fonction en rapport à sa position dont la répartition de noircissement correspond au "shading" des signaux de réception.

16. Dispositif conforme à l'une des revendications 1 à 15, caractérisé par le fait qu'il se trouvent sur le groupe de réception des hydrophones de conduction lumineuse, conçus sous forme d'interféromètres et que chaque hydrophone de conduction lumineuse forme un élément individuel du groupe de réception et ainsi le modulateur à bande latérale unique associé du groupe de modulateurs.

Fig. 1

Fig. 2

Fig. 3a

Fig. 3b

Fig. 4

Fig. 5

Fig. 6

600    605    608 610 104 105    110

604

607

603

a    z + x = b

f

Fig. 7